# EUROPEAN PATENT APPLICATION

(11) **EP 4 847 392 A1**
(43) Date of publication of application: **02.12.2026**
(21) Application number: 26169732.0
(22) Date of filing: 31.03.2026
(51) Int. Cl.: B64F 1/28, B64D 37/00

(54) **WIRELESS AIRCRAFT REFUELING DEVICE WITH INDEPENDENT FUEL QUANTITY CROSSCHECK**

(30) Priority: 29.05.2025 US 202519221921
(71) Applicant: The Boeing Company, Arlington, VA 22202 (US)
(72) Inventor: MAUE, Paul Jeremy, Arlington, 22202 (US); GROAT, John Everett, Arlington, 22202 (US); MACKINNON, Victoria Marie, Arlington, 22202 (US)
(74) Representative: Boult Wade Tennant LLP

(57) **Abstract**

A handheld device configured for aircraft refueling operations receives sensor data values from a refueling station panel on the aircraft. The sensor data values are received over a redundant processing path that is independent of the processing path primarily used by the aircraft for refueling operations. Then, using resources associated with the redundant processing path, the handheld device executes a FQ measurement cross-check verification procedure for one or more of the aircraft's fuel tanks based on the received sensor data values, and indicates the results of that procedure to the flight deck.

## Description

### TECHNICAL FIELD

The present disclosure relates generally to refueling systems, and more particularly, to a portable, handheld device for refueling a vehicle and for performing independent crosscheck functions to verify the fuel load onboard an aircraft.

### BACKGROUND

Investigations into incidents involving aircraft indicate that human factors can play a significant role in the safety of the aircraft, crew, and passengers. For example, consider an aircraft refueling process. In addition to following the requisite safety precautions and procedures, refueling personnel must also be certain to load the aircraft with the correct amount of fuel. Indeed, consequences can result from situations where refuelers incorrectly identify the amount of fuel that is/has been loaded onboard, or where the flight crew misinterprets or receives incorrect fuel quantity data. In addition to these human factors, defective or failed equipment can also negatively affect refueling operations. For example, unforeseen system fuel quantity measurement errors, such as those caused by faulty equipment, can cause similar issues.

### BRIEF SUMMARY

Examples of the present disclosure relate to a handheld device for refueling an aircraft, and for independently verifying the amount of fuel that is or has been loaded onboard the aircraft. To accomplish these functions, the handheld device of the present disclosure processes the fuel quantity (FQ) sensor data output by one or more FQ measurement sensors disposed in the aircraft fuel tanks. So processed, the handheld device of the present disclosure transmits a verification indication to a fuel panel installed on the flight deck of the aircraft, thereby enabling the flight crew to quickly and easily verify that an appropriate amount of fuel has been loaded onto the aircraft.

There is described herein a handheld device for refueling an aircraft. The handheld device of this example comprises communication circuitry configured to communicatively connect the handheld device to a refueling station panel on the aircraft and processing circuitry. The processing circuitry is configured to establish a secure communications link with the refueling station panel on the aircraft, receive, from the refueling station panel, sensor data values over the communications link, wherein the sensor data values are converted from raw sensor data output by one or more fuel quantity (FQ) measurement sensors in one or more fuel tanks on the aircraft, execute, independently of a fuel processing computer on the aircraft, an FQ measurement cross-check procedure for the one or more fuel tanks based on the sensor data values received from the refueling station panel, and transmit a verification message to the aircraft indicating a result of the FQ measurement cross-check procedure for the one or more fuel tanks.

In some examples, the secure communications link comprises a wireless link configured to carry encrypted data. To establish a secure wireless communications link, the processing circuitry is configured to obtain connection information defining the secure wireless communications link with the aircraft. In this and certain other examples, the connection information comprises an aircraft identifier uniquely identifying the aircraft, data identifying an onboard computer of the aircraft, and authorization credentials. So obtained, the handheld device is further configured to establish the secure wireless communications link with the aircraft based on the authorization credentials.

In some examples, the authorization credentials comprise an authentication passcode displayed on the refueling station panel disposed on the aircraft.

In some examples, the handheld device further comprises an optical sensor configured to scan a Quick Response (QR) code on the refueling station panel disposed on the aircraft. In these examples, to obtain the connection information, the processing circuitry is configured to extract the connection information from the scan of the QR code.

In some examples, the handheld device further comprises an interactive graphical user interface (GUI). The interactive GUI comprises a control section having one or more selectable controls comprising at least one of a communication control that, when actuated, causes the processing circuitry to establish the secure communications link with the refueling station panel, a fuel cross-check control that, when actuated, causes the processing circuitry to execute the FQ measurement cross-check procedure for the one or more fuel tanks based on the sensor data values received from the refueling station panel, a refueling control that, when actuated, causes the processing circuitry to perform one or more refueling functions associated with refueling the aircraft, a temperature array control that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank, and a utility control that, when actuated, causes the processing circuitry to launch a utility function on the handheld device.

In some examples, the handheld device further comprises the interactive GUI further comprises a fuel tank status section configured to display one or more of an amount of fuel currently in each of the one or more fuel tanks, a temperature of the fuel currently in each of the one or more fuel tanks, and a total amount of fuel on the aircraft.

In some examples, the interactive GUI further comprises a sensor data display section configured to graphically display verified measurement values for the sensors in the one or more fuel tanks, wherein the verified measurement values are output by the FQ measurement cross-check procedure, and a status of each of the one or more FQ measurement sensors in each of the one or more fuel tanks.

In some examples, the interactive GUI further comprises a fuel tank status section configured to graphically display the status of each of the one or more FQ measurement sensors in each of the one or more fuel tanks, and/or a fuel surface level as measured by each of the one or more FQ measurement sensors in each of the one or more fuel tanks.

In some examples, the fuel tank status section comprises one or more view controls. Each view control is associated with a corresponding fuel tank of the one or more fuel tanks.

In some examples, to execute the FQ measurement cross-check procedure, the processing circuitry is configured to verify the sensor data values received from the refueling station panel independently of the fuel processing computer on the aircraft.

There is described herein a method for refueling an aircraft. The method is implemented by a handheld device and calls for the handheld device establishing a secure communications link between the handheld device and a refueling station panel on the aircraft, receiving, from the refueling station panel, sensor data values over the secure communications link, where the sensor data values are converted from raw sensor data output by one or more fuel quantity (FQ) measurement sensors in one or more fuel tanks on the aircraft, executing, independently of a fuel processing computer on the aircraft, an FQ measurement cross-check procedure for the one or more fuel tanks based on the sensor data values received from the refueling station panel, and transmitting, a verification message to the aircraft indicating a result of the FQ measurement cross-check procedure for the one or more fuel tanks.

In some examples, the secure communications link comprises a wireless link and is configured carry encrypted data. In such examples, establishing a secure wireless communications link comprises obtaining connection information defining the secure wireless communications link with the aircraft. The connection information comprises an aircraft identifier uniquely identifying the aircraft, data identifying an onboard computer of the aircraft, and authorization credentials. So obtained, the method calls for the handheld device establishing the secure wireless communications link with the aircraft based on the authorization credentials.

In some examples, the authorization credentials comprise an authentication passcode displayed on the refueling station panel disposed on the aircraft.

In some examples, obtaining connection information defining the secure wireless communications link with the aircraft comprises scanning a Quick Response (QR) code displayed on the refueling station panel disposed on a surface of the aircraft using a camera of the handheld device, and extracting the connection information from the scan of the QR code.

In some examples, the method further comprises generating an interactive graphical user interface (GUI) for output to a display of the handheld device. In these examples, the interactive GUI comprises a control section having one or more selectable controls comprising at least one of a communication control that, when actuated, establishes the secure communications link with the refueling station panel, a fuel cross-check control that, when actuated, executes the FQ measurement cross-check procedure for the one or more fuel tanks based on the sensor data values received from the refueling station panel, a refueling control that, when actuated, executes one or more refueling functions associated with refueling the aircraft, a temperature array control that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank, and a utility control that, when actuated, launches a utility application function on the handheld device.

In some examples, the interactive GUI further comprises a fuel tank status section configured to display one or more of an amount of fuel currently in each of the one or more fuel tanks, a temperature of the fuel currently in each of the one or more fuel tanks, and a total amount of fuel on the aircraft.

In some examples, the interactive GUI further comprises a sensor data display section configured to graphically display verified measurement values for the sensors in the one or more fuel tanks, wherein the verified measurement values are output by the FQ measurement cross-check procedure, and a status of each of the one or more FQ measurement sensors in each of the one or more fuel tanks.

In some examples, the interactive GUI further comprises a fuel tank status section configured to graphically display the status of each of the one or more FQ measurement sensors in each of the one or more fuel tanks, and/or a fuel surface level as measured by each of the one or more FQ measurement sensors in each of the one or more fuel tanks.

In some examples, executing, independently of a fuel processing computer on the aircraft, an FQ measurement cross-check procedure for the one or more fuel tanks, comprises verifying the sensor data values received from the refueling station panel independently of the fuel processing computer on the aircraft.

There is described herein a handheld device for refueling an aircraft. In some examples, the handheld device comprises memory circuitry configured to store a control program and processing circuitry. The processing circuitry is configured to execute the control program to receive, from the refueling station panel, sensor data values, wherein the sensor data values are converted from raw sensor data output by one or more fuel quantity (FQ) measurement sensors associated with one or more fuel tanks on the aircraft, execute, independently of a fuel processing computer on the aircraft, an FQ measurement cross-check procedure for one or more fuel tanks based on the sensor data values received from the refueling station panel, and transmit a verification message to a flight deck panel on the aircraft indicating a result of the FQ measurement cross-check procedure for the one or more fuel tanks.

### BRIEF DESCRIPTION OF THE DRAWINGS

Examples of the present disclosure are illustrated by way of example and are not limited by the accompanying figures with like references indicating like elements.
Figure 1 is an isometric diagram of an aircraft configured.
Figure 2 is a side schematic diagram of an aircraft fuselage having fuel tanks positioned along a lower deck.
Figure 3 is a functional block diagram illustrating a refueling system for an aircraft.
Figure 4 illustrates a refueling panel located on an external surface of an aircraft.
Figures 5A-5B illustrate example views of an interactive graphical user interface (GUI) generated for a handheld device.
Figure 6 is a flow diagram illustrating a method for performing an independent fuel quantity (FQ) measurement cross-check procedure.
Figure 7 is a flow diagram illustrating a method for establishing a secure communications link between a handheld device and an aircraft being refueled.
Figure 8 is a functional block diagram of a handheld device configured to perform a FQ measurement cross-check procedure.

### DETAILED DESCRIPTION

Refueling operations are very important for the safety of an aircraft. Current aircraft refueling procedures require ground refueling personnel (i.e., "refuelers") to monitor a refueling station panel disposed proximate a leading edge of the aircraft. These procedures, however, can be problematic. For example, refueling station panels are typically located under a wing of the aircraft proximate the leading edge of the wing. However, this location necessarily creates a height disparity between the ground-based refueler and the refueling station panel making it difficult for refueler and other ground-based personnel to interact with the refueling station panel when refueling the aircraft.

The present disclosure addresses these, and other concerns related to whether a given aircraft does or does not have an appropriate amount of fuel onboard. Particularly, examples of the present disclosure provide a handheld device for refueling an aircraft and for verifying whether the amount of fuel that is or has been loaded onboard the aircraft is correct. According to the present disclosure, such verification utilizes the fuel quantity (FQ) sensor data output by one or more FQ measurement sensors in the fuel tanks of the aircraft. Additionally, verification according to the present examples is performed independently of other refueling-related procedures on the aircraft. Upon completing verification, the handheld device transmits a verification indication to a fuel panel installed on a flight deck of the aircraft, thereby enabling the flight crew to quickly verify whether the appropriate amount of fuel has been loaded onto the aircraft.

Incorporating the handheld device of the present examples into refueling operations provides benefits and advantages that conventional refueling operations cannot or do not provide. For example, not only does the use of the handheld device with its independent cross-check functionality increase the awareness of the refuelers and other ground-based personnel as to the quantity of fuel that is currently in the fuel tanks, but it also decreases the chances that human errors will occur and makes the refueling process more ergonomical.

In more detail, the handheld device disclosed herein utilizes the FQ sensor data output by the FQ measurement sensors to perform an independent verification check. That is, both existing refueling systems and the handheld device of the present examples utilize the same FQ sensor data output by the FQ measurement sensors to determine the amount of fuel currently onboard the aircraft. According to the present examples, the FQ sensor data may be obtained from a variety of different locations on the aircraft depending on the configuration of the aircraft. Such locations include, but are not limited to, the refueling station panel. To facilitate delivery of the sensor data to the handheld device, the refueling station panel is configured to provide one or both of a wireless connection and a wired connection. Additionally, the handheld device may obtain the sensor data from a wireless hub connection on the aircraft and/or a physical data bus, such as the bus that extends between the Fuel Quantity Indicating System (FQIS) and the displays on the flight deck.

Additionally, the present disclosure configures the handheld device to verify the accuracy of, and interpret, that FQ sensor data utilizing a processing path that is independent of the path utilized by the existing refueling systems on the aircraft. Particularly, one or more algorithms, circuits, components, computing devices, and/or nodes that define the processing path used by the handheld device in the disclosed verification process are different than, and independent of, those defining the processing path used by existing refueling systems. This helps ensure that the verification process implemented by the handheld device is not affected by or subject to the same possible errors that the existing refueling systems are subject to. Other benefits and advantages over conventional systems will become apparent in light of the following description and corresponding figures.

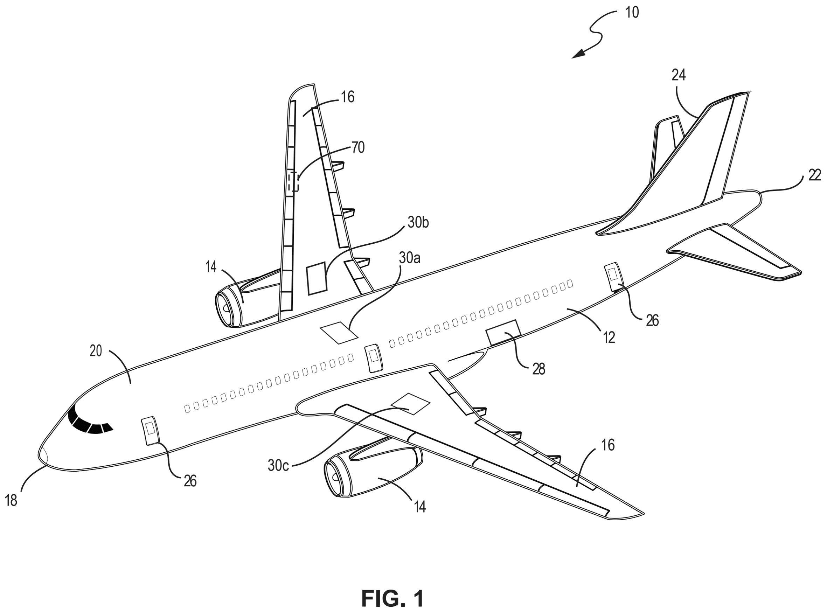

Turning now to the drawings, Figure 1 illustrates an aircraft 10, configured according to examples of the present disclosure, to transport passengers and/or cargo. As seen in Figure 1, aircraft 10 generally includes a fuselage 12 with an interior space configured to accommodate passengers and/or cargo. Engines 14 are mounted on the wings 16 on opposite sides of the fuselage 12. A forward end 18 of the fuselage 12 includes a flight deck 20 with various controls to enable flight personnel to control and monitor the many operations of, and associated with, aircraft 10. As described in more detail below, such operations include, but are not limited to, refueling operations and verification procedures.

An aft end 22 of the fuselage 12 includes a tail section 24. One or more doors 26 are positioned along a side of aircraft 10 to enable ingress and egress of people and cargo into and out of aircraft 10. Landing gear 28 is mounted at the bottom of the fuselage 12 and is movable between a stowed position and a deployed position.

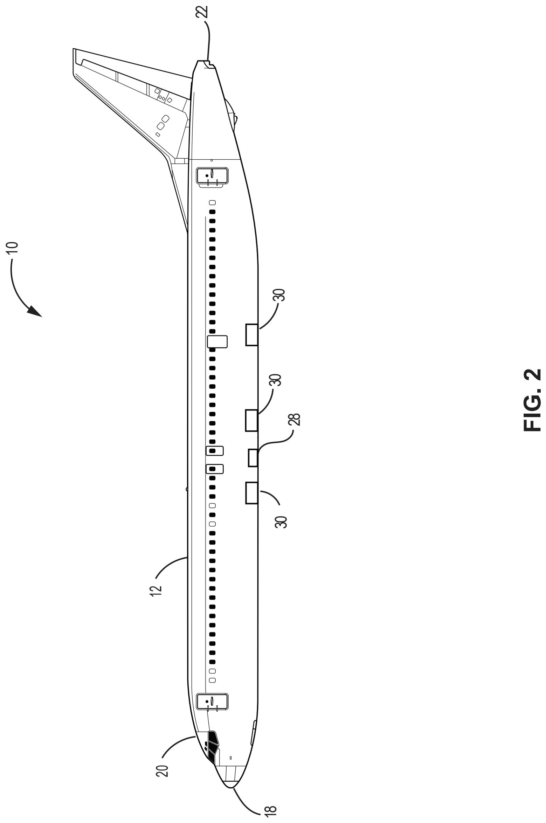

One or more fuel tanks 30a, 30b, 30c (collectively referred to herein as "fuel tanks 30") store fuel that is used by the engines 14. The fuel tanks 30 can be mounted at various positions within the aircraft 10 including, but not limited to, within the fuselage 12 and/or wings 16. Figure 1 includes an example with fuel tanks 30 that are aligned with the wings 16 and include a center fuel tank 30a positioned at the fuselage 12 and wing fuel tanks 30b, 30c positioned in respective wings 16. Figure 2 illustrates an example with fuel tanks 30 mounted at a lower deck of the fuselage 12.

To facilitate refueling operations, which are described in more detail below, aircraft 10 includes a refueling station panel 70. Generally, as seen in this and certain other examples, the refueling station panel 70 is located on an undersurface of aircraft 10 near a leading edge of a wing 16 and proximate a connector configured to receive a fuel hose. However, the particular location of refueling station panel 70 as shown in this and certain other examples is illustrative only. Other aircraft and/or types of aircraft may position the refueling station panel 70 in a different location on aircraft 10.

As previously stated, conventional FQ systems may provide redundancy; however, the redundancy provided by such systems is problematic. Particularly, conventional FQ measurement systems use the same devices and processing paths to both determine and verify the amount of fuel onboard an aircraft 10. Thus, the same errors (e.g., electrical, mechanical, human, etc.) that affect the computations of an existing refueling system for determining the amount of fuel onboard an aircraft 10 will necessarily affect the computations for verifying that determined amount. Accordingly, conventional FQ systems are not able to provide an independent method of verifying a computed amount of fuel onboard an aircraft, and therefore, are unable to identify unforeseen system and/or human errors related to refueling the aircraft 10.

Conventional solutions have placed redundant warning lights (e.g., flashing lights) adjacent the refueling station panel 70 on aircraft 10 to alert refueling personnel to any issues. However, while conventional solutions provide alerts, they do not provide specific information about an issue that may be needed by, and/or useful to, a refueler or other ground-based personnel to mitigate the cause of the alert. A handheld device configured according to the present disclosure, however, performs its verification computations along an independent processing path, thereby allowing the handheld device to identify the existence of any unforeseen system and/or human errors. Additionally, the handheld device is configured to provide visual, audible, and/or tactile indications to actively alert the refueling and/or flight deck personnel to the existence of a refueling issue, as well as localized information describing the issue, and in some cases, one or more actions for personnel to take to mitigate or eliminate the issue.

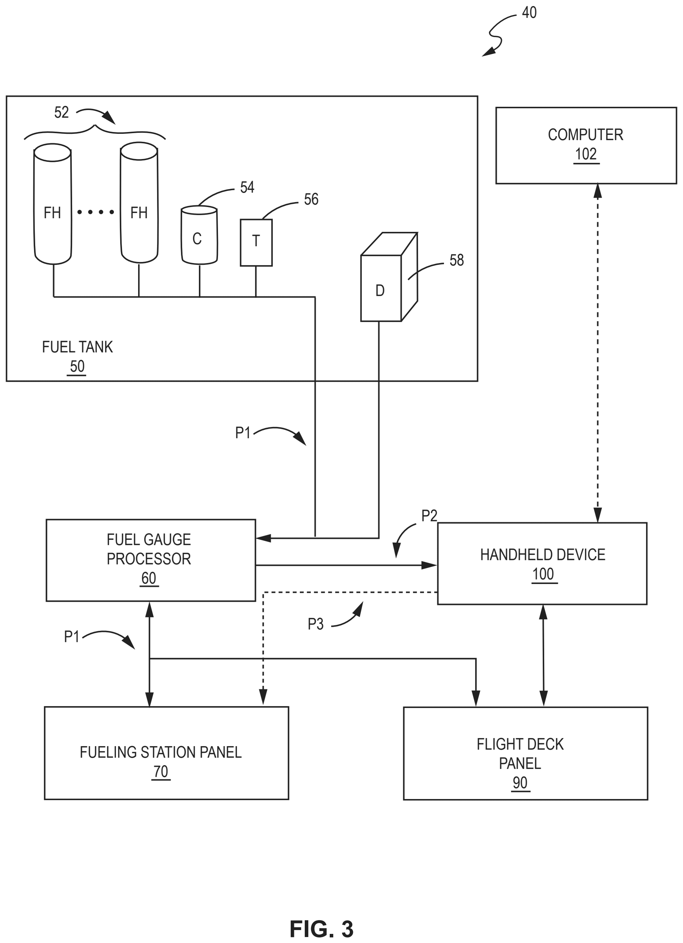

Figure 3, for example, is a functional block diagram illustrating one such system 40 for independently verifying an amount of fuel that is onboard aircraft 10 according to the present disclosure. As seen in Figure 3, system 40 comprises a fuel tank 50, a fuel gauge processor 60, a refueling station panel 70 (also referred to herein as a refueling panel 70), a flight deck panel 90, and a handheld device 100. In some examples, system 40 may also comprise a computer 102 configured to perform the computations herein described for verifying the amount of fuel onboard aircraft 10. In some cases, computer 102 is located onboard the aircraft 10; however, those of ordinary skill in the art will readily appreciate that this is merely for illustrative purposes. In at least one example, computer 102 is located away from the aircraft 10, such as in a computer network, for example, but is also communicatively connected to both the aircraft 10 and handheld device 100.

Generally, a fuel tank 50 on aircraft 10 comprises a plurality of FQ sensors for measuring the quantity and/or quality of the fuel onboard aircraft 10. Such FQ sensors include, for example, a plurality of fuel height sensors 52, a compensator 54, a temperature sensor 56, and a densitometer 58.

As is known in the art, fuel height sensors 52 are commonly referred to as capacitive sensors and detect changes in capacitance to sense the height of the fuel within tank 50. To accomplish this function, fuel height sensors 52 monitor the changes in the dielectric properties of the fuel as the fuel tank 50 fills with and empties the fuel and output electrical signals representing that change in capacitance (i.e., these signals are referred to herein as "raw sensor data"). Similarly, densitometer 58 is a sensor configured to measure the density of the fuel in fuel tank 50. Generally, although each of the one or more fuel tanks 50 on aircraft 10 have multiple fuel height sensors 52, each tank typically only has one compensator 54, one temperature sensor 56, and one densitometer 58.

The compensator 54, which may be, for example, a capacitance index compensator (CIC), is a device configured to correct for variations in fuel density and the dielectric constant to ensure accurate fuel quantity readings. In more detail, both the fuel density and the dielectric constant can vary according to a variety of factors such as variations in temperature, the type of fuel being used by aircraft 10, and the additives in the fuel (e.g., the chemical makeup of the fuel). Compensator 54 therefore measures the dielectric constant and uses that measured value to normalize the measurements output by the fuel height sensors 52. So compensated, the measurements output by the fuel height sensors 52 are more precise, thereby ensuring more accurate fuel quantity calculations, and ultimately, a more precise indication of the quantity of fuel in tank 50.

The temperature sensor 56 monitors the temperature of the fuel in tank 50. As known by those of ordinary skill in the art, the temperature of the fuel can vary with the ambient temperature, the altitude, and the heat emitted by engines 14. Therefore, the temperature sensor 56 periodically measures the temperature of the fuel and reports those temperatures to the flight deck 20 and/or other devices and systems associated with aircraft 10. Not only do such measurements help optimize the delivery of the fuel to the engines 14, but they also facilitate safe fuel operations and help prevent issues with the aircraft's engines, such as vaporization and vapor lock.

Regardless of their particular functions, however, each of the fuel height sensors 52, the capacitive sensor 54, the temperature sensor 56, and densitometer 58 output respective raw sensor data (i.e., electrical signals representing raw capacitance, dielectric, density, and temperature measurement data) along a first processing path P1 to a fuel gauge processor 60. Upon receipt, the fuel gauge processor 60 converts that raw sensor data into (typically) numerical values (herein referred to as "sensor data") that are then used to calculate the amount of fuel in tank 50.

For example, the fuel gauge processor 60 is a computer device disposed onboard aircraft 10. In operation, flight gauge processor 60 receives the raw sensor data (i.e., the aforementioned electrical signals) output by the sensors 52, 54, 56, 58. As previously stated, the received raw sensor data represents, respectively, the detected changes in the measured capacitance, dielectric, fuel density, and temperature of the fuel in tank 50. Once received, fuel gauge processor 60 converts the detected changes in capacitance into a corresponding fuel level (e.g., in gallons, or liters) using one or more well-known algorithms. Similarly, fuel gauge processor 60 also converts the measured density of the fuel in tank 50 into units of mass/volume, which together can be utilized to determine the mass (i.e., amount) of the fuel in tank 50. So converted, fuel gage processor 60 provides, along processing path P1, the resultant values representing the amount of fuel in tank 50 to refueling station panel 70 and to flight deck panel 90 disposed on the flight deck 20 of aircraft 10.

At this point, the refuelers and the flight deck personnel have a reading on the amount of fuel in tank 50. However, given the possibility of human and/or mechanical/electrical error, these computed values could have unexpected consequences. Verification of the values is therefore required. According to the present disclosure, such verification is performed by handheld device 100, and in some examples, by computer 102.

As will be described in more detail below, a handheld device 100 configured according to the present examples first establishes a communications link with aircraft 10. The communications link, which may be wireless or wired, forms part of a second processing path P2 that is entirely independent of the first processing path P1. Particularly, once the handheld device 100 has established the communications link with aircraft 10, the sensor data for each of the sensors 52, 54, 56, 58 (i.e., the values converted from the raw sensor data output by sensors 52, 54, 56, 58) are sent to handheld device 100 via processing path P2. Once received, handheld device 100 performs computations on the sensor data thereby converting the received sensor data into corresponding values indicating the current fuel level, fuel volume, and fuel mass in tank 50. In this and certain other examples, handheld device 100 is configured to perform these computations; however, those of ordinary skill in the art should appreciate that this the present disclosure not so limited. In some examples, handheld device 100 is configured to establish a communications link, which may be wireless or wired, with computer 102. So established, handheld device 100 can utilize the processing power of computer 102 to perform the calculations converting the sensor data into the corresponding fuel level, fuel volume, and fuel mass values.

Regardless though, handheld device 100 provides a verification indication regarding the status of the fuel (e.g., the amount of fuel) in tank 50 to the flight deck panel 90. So provided, flight deck personnel can quickly and easily verify the accuracy of the values provided by the fuel gauge processor 60 onboard aircraft 10 prior to dispatching aircraft 10.

The verification indication can take any of a variety of forms. In some examples, the verification indication comprises a message having values representing the amount and mass of the fuel currently in tank 50. Such values can be displayed on flight deck panel 90 and compared by the flight deck personnel to the values provided by fuel gauge processor 60. This allows the flight deck personnel to quickly and easily determine whether the fuel tank 50 has the correct amount of fuel (e.g., where the values provided by fuel gauge processor 60 match those provided by handheld device 100), or whether an issue may exist that requires investigation (e.g., where the values provided by fuel gauge processor 60 do not match those provided by handheld device 100). In at least one example, the values provided by handheld device 100 must be within a predetermined threshold (e.g., 1%) of the values provided by fuel gauge processor 60 to be considered matching.

Additionally, according to the present disclosure, the verification indication can comprise a visual indicator (e.g., blinking lights), an audible indicator, a tactile indicator, or any combination thereof, that alerts the flight deck personnel to the existence of a mismatch between the values provided by the fuel gauge processor 60 and handheld device 100. In at least one example, the same or similar verification indication may also be provided to the refueling station panel 70, which can have another independent wireless or wired communication path P3 established with handheld device 100. Thus, in at least these latter situations, both the refueling personnel and the flight deck personnel can be made aware of the same possible fuel-related discrepancies.

Regardless, the example of Figure 3 illustrates that data related to the refueling of aircraft 10 is processed by entirely different and independent processing paths P1 and P2. Each processing path P1, P2, which include fuel gauge processor 60 and handheld device 100, respectively, comprises its own resources and processing power to compute the status of the fuel in tank 50 (e.g., the amount of fuel) based on the same values representing the same raw sensor data output by fuel height sensors 52, compensator 54, temperature sensor 56, and densitometer 58. So determined, the results of those computations, and an indication of the accuracy of those results, are provided to the flight deck panel 90.

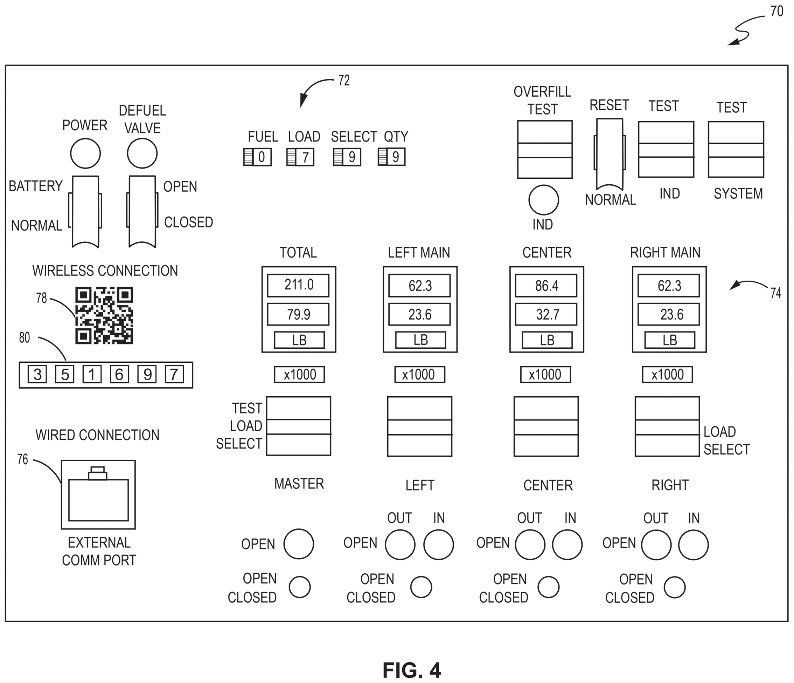

Figure 4 illustrates a refueling station panel 70 configured according to an example of the present disclosure. In this and certain other examples, refueling station panel 70 is located on an external surface of aircraft 10 (e.g., underneath wing 16 and proximate the leading edge of wing 16). In some examples, the refueling station panel 70 is located under the starboard (i.e., right) wing, while in other examples, the refueling station panel 70 is located under the port (i.e., left) wing. In some examples of the present disclosure, a respective refueling station panel 70 is located under each wing 16. Regardless of the number of refueling station panels 70, however, each panel 70 receives values that are determined based on the raw sensor data output by sensors 52, 54, 56, and 58 for display to a refueler on the ground.

As seen in Figure 4, refueling station panel 70 comprises a variety of components including, but not limited to, a fuel load select control 72, a fuel load quantity display section 74, an external communications port 76 (e.g., an ETHERNET port), a Quick Response (QR) code 78, and an authorization passcode indicator 80.

In this and certain other examples, the fuel load select control 72 comprises a plurality of mechanical dials. In operation, refueling personnel rotate each dial to set the total load target of the fuel to be placed into a fuel tank 50. The fuel load target is set for each tank 50 separately and is reflected in units of weight, such as pounds (lbs) or kilograms (kgs).

The fuel load quantity display section 74 is configured to display the measured amount of fuel currently stored in each of the plurality of fuel tanks 50 on aircraft 10 (e.g., fuel tanks 30a, 30b, 30c seen in Figure 1), as well as the total amount of fuel currently in all of the fuel tanks 50 of aircraft 10. In this and certain other examples, the units for the fuel are displayed in pounds (LB), although other examples display the units in kilograms (KG).

The external communications port 76 may comprise, for example, an ETHERNET port configured to connect to an external device (e.g., handheld device 100) via an ETHERNET cable. When not in use, a dust plug with lanyard may be used to keep the port clean. According to the present disclosure, data can be transferred between the external device and refueling station panel 70 via external communications port 76. For example, in some examples, the external device comprises handheld device 100. In this and certain other examples, upon detecting the connection of handheld device 100 to external communications port 76, software executing on either the handheld device 100 or refueling station panel 70, for example, automatically initiates establishing a communications link with aircraft 10. Such functionality is generally known in the art as "plug-n-play."

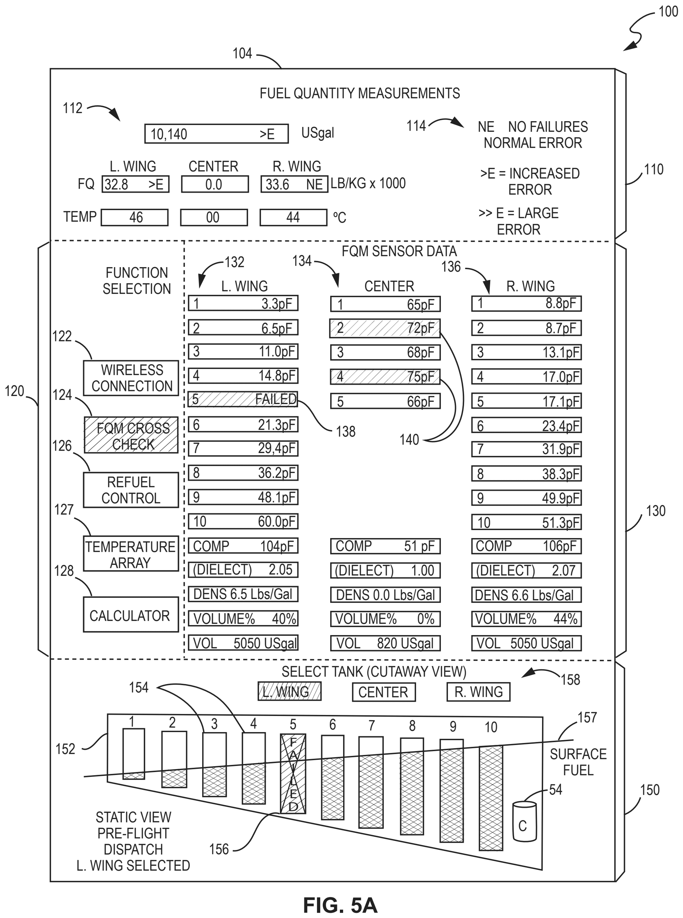

The communications link in this and certain other examples may be automatically established responsive to detecting that the handheld device 100 has been connected to external communications port 76. To ensure that the connection is a secure connection, ground-based refueling personnel armed with handheld device 100 may be prompted to enter authentication credentials. For example, Figure 4 illustrates the authentication passcode indicator 80 on panel 70 displaying an authentication passcode. The authentication passcode in this and certain other examples comprises a random alpha-numeric sequence (e.g., "351697") that may be preset by the manufacturer of panel 70 and dynamically updated, or it may be dynamically generated as part of the authentication process. In some examples, an onboard (or other) computer system dynamically generates the authentication passcode for display on the authentication passcode indicator 80 of panel 70 (e.g., responsive to detecting a connection request from handheld device 100, or responsive to user input via handheld device 100). During establishment of the communications link, a refueler would be prompted to input the authentication passcode displayed on panel 70 into handheld device 100 via a graphical user interface (seen later in Figure 5A). Provided the authentication passcode entered by the refueler matches an authentication code stored in a memory on aircraft 10 (or on panel 70 or some other computing device communicatively connected to panel 70), the refueler would be authorized to interact with the fueling system on aircraft 10.

Those of ordinary skill in the art should appreciate that the present examples are not limited solely to wired connections between handheld device 100 and aircraft 10. In other examples, for example, the secure communications link is established as a wireless communications link using QR code 78.

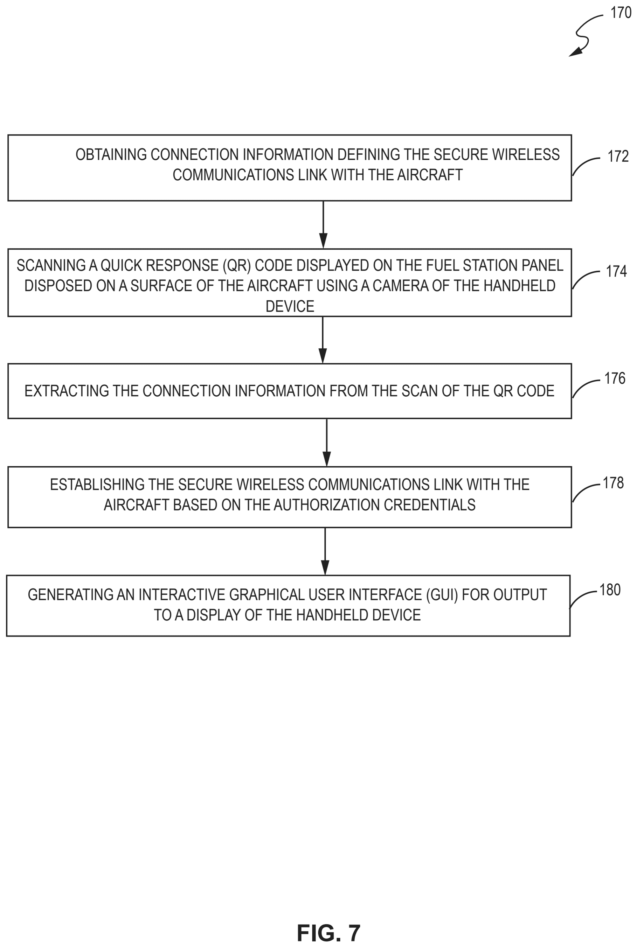

Particularly, in this and certain other examples, the handheld device 100 comprises an optical sensor, such as a camera (seen later in Figure 7). The QR code 78 is generated to comprise information that may be used to establish the secure connection. By way of example only, the information stored in QR code 78 may define one or more parameters needed for establishing a wireless communications link. Such parameters may include, but are not limited to, the identity and address of a destination device with which handheld device 100 will communicate (e.g., a computer on-board aircraft 10 or another available via a communications network), and any other parameters needed to establish the wireless communications link.

In operation, refueling personnel would scan the QR code 78 using the camera of handheld device 100. Upon completion of the scan, the handheld device 100 would extract the information needed from the QR code 78 using any known technique, and then automatically initiate the procedure to establish that link using the extracted information. Thus, scanning the QR code 78 according to the present examples may function as a trigger to control handheld device 100 to automatically establish the communications link.

Additionally, as stated above, panel 70, or some other computer communicatively connected to panel 70 (e.g., a computer on aircraft 10), may dynamically generate the authorization passcode for display on panel 70. In these situations, the user would enter the authorization passcode displayed by the authorization passcode indicator 80 of panel 70 into the handheld wireless device 100 via a graphical user interface, for example. So entered, panel 70 (or some other computer onboard aircraft 10) would validate the authentication passcode. If the passcode entered by the refueler is determined to be valid (e.g., if it matches the authorization passcode stored in memory of the panel 70 and/or another computer on-board aircraft 10), link establishment is completed.

It should be noted here that using QR code 78 and the authorization passcode advantageously allows for the establishment of a communications link strictly between the handheld device 100 and only the particular aircraft 10 with which panel 70 is associated. For example, aircraft 10 will typically be refueled at a location where other aircraft 10 are located. Each of these other aircraft 10 may be different types of aircraft and/or have different sets of fuel requirements. Therefore, it is important that handheld device 100 establishes the communications link with the correct aircraft 10, regardless of whether the link being established is wired or wireless.

Additionally, in some examples, the parameters encoded into QR code 78 ensure that no personnel can access any of the systems on aircraft 10 other than those needed for refueling aircraft 10. Such parameters may include, but are not limited to, one or more identifiers, switches, and/or indicators defining the systems and/or subsystems on aircraft 10 that refueling personnel are authorized to access. Thus, a refueler using QR code 78 to establish a communications link between handheld device 100 and aircraft 10 would only be granted access to the refueling systems on that aircraft 10. The refueler would not be granted access to any of the other systems and subsystems on aircraft 10 (e.g., avionics). Nor would they be granted access to any of the systems and subsystems on any of the other aircraft that may be proximate aircraft 10.

In some examples, the data communicated between handheld device 100 and aircraft 10 is encrypted, thereby further securing communications over the wireless or wired communications link. Any encryption technique known in the art may be utilized to encrypt the data; however, in at least one example, the data communicated between handheld wireless device 100 and aircraft 10 is encrypted and decrypted according to the well-known and widely used Advanced Encryption Standard (AES). As is known in the art, AES is a highly secure technique for protecting sensitive data and other electronic information. AES makes use of symmetric encryption (i.e., where the same key is used to both encrypt and decrypt data) and encrypts information in fixed-size data blocks of 128 bits using either a 128-bit key (i.e., AES-128), a 192-bit key (i.e., AES-192), or a 256-bit key (i.e., AES-256).

Other encryption methods may also be used with the present examples. For example, in other examples, the data communicated between handheld device 100 and aircraft 10 is encrypted and decrypted using any of a variety of asymmetric encryption techniques. Some well-known asymmetric encryption techniques include, but are not limited to, private key/public key encryption techniques and Rivest-Shamir-Adleman (RSA) techniques. In still other examples, data is encrypted and decrypted using any of the well-known Triple Data Encryption Standard (DES) algorithms, Blowfish, and Twofish. Regardless of the particular encryption technique used, communications between handheld device 100 and aircraft 10 is restricted so that refueling personnel can only access the systems and subsystems on aircraft 10 for which they are authorized. Further, encrypting the data as described herein helps prevent malicious third-party actors from eavesdropping on the communications to obtain access to the systems and/or subsystems on aircraft 10.

Figure 5A illustrates an example interactive graphical user interface (GUI) 104 for a handheld device 100 configured according to one example of the present disclosure. As seen in Figure 5A, the interactive GUI 104 comprises an FQ measurement section 110, a control section 120, sensor data display section 130, and a fuel tank status section 150. In general, the data values seen on the interactive GUI of Figure 5A are generated by handheld device 100. However, in some examples, these data values may be generated by another computing device, such as computer 102 of Figure 3, and then provided to handheld device 100 for display to ground-based refueling personnel.

Regardless of where the data values for display are generated, the FQ measurement section 110 comprises a first set of informational fields 112 indicating the amount of fuel that is currently in each of the plurality of fuel tanks (shown here as "L. Wing", "Center", and "R. Wing"), as well as the total amount of fuel that is currently in all fuel tanks on aircraft 10. Additionally, the first set of informational fields 112 also includes a set of temperatures indicating the temperature of the fuel in each respective fuel tank.

As seen in Figure 5A, the temperatures of the fuel in each respective fuel tank are provided in Celsius. Further, the amount of fuel (i.e., mass) in each individual fuel tank of aircraft 10 is provided in either pounds or kilograms. The total amount of fuel (i.e., volume) in all the fuel tanks of aircraft 10, however, is provided in US gallons or liters. Again, the identification of any particular unit or units for the fuel is entirely for illustrative purposes and the fuel amounts may be displayed on handheld device 100 (and/or panel 70) in any units needed or desired.

The interactive GUI 104 may also be generated, in at least some examples, to comprise a legend 114. The legend 114 comprises one or more qualifying labels and may be displayed in this (or another) section to indicate how a refueler should interpret the status of the FQ measurements. For example, in this and certain other examples, the values in the first set of fields 112 may be qualified according to the qualifying labels in the following table.

| | |
|---|---|
| NE | No Failure/Normal Error Condition |
| >E | An Increased Error exists |
| >>E | A Large Error exists |

However, as those of ordinary skill in the art will readily appreciate, these particular qualifying labels are illustrative only. Any values, labels, or indicators needed or desired may be utilized to populate legend 114.

The control section 120 performs a dual function. In a first function, control section 120 enables refueling personnel to control operation of handheld device 100 via a plurality of controls 122, 124, 126, 127, 128. In this and certain other examples, these controls include a wireless connection control 122, a FQ measurement cross-check control 124, a refuel control 126, a temperature array control 127, and a utility application control 128.

The wireless connection control 122, when actuated, causes the handheld device 100 to launch a communications program to establish a wireless connection with which handheld device 100 will communicate data with aircraft 10 and provide a display of the connection particulars. In this and certain other examples, actuating wireless connection control 122 may automatically enable or activate an optical sensor of handheld device 100 (e.g., camera) to allow refueling personnel to scan QR code 78 on panel 70. So scanned, handheld device 100 would then extract the data required to establish a wireless communications link. Additionally, in at least one example, actuation of wireless connection control 122 triggers handheld device 100 to launch a dialog box or similar user input window prompting the refueling personnel to enter the dynamically generated authorization passcode displayed by authorization passcode indicator 80 on panel 70.

The FQ measurement cross-check control 124, when actuated, controls handheld device 100 to obtain the sensor data values from panel 70 for each of the fuel tanks 50 on aircraft 10. In some examples, handheld device 100 generates and transmits one or more request messages to panel 70 requesting the sensor data values converted by panel 70 from the measurements (i.e., the raw sensor data) provided by sensors 52, 54, 56, 58 in each tank 50. Those sensor data values, which are received by handheld device 100 along processing path P2, are then used to determine the cross-check information needed to populate each interactive GUI section 110, 130, and 150. Further, as previously described, the cross-check information is provided to the flight deck panel 90 and used to verify the fuel information provided to the flight deck panel 90 by refueling station panel 70. Additionally, in one or more examples, the data transmitted and received by handheld device 100 may be encrypted and/or decrypted according to any known encryption technique (e.g., AES).

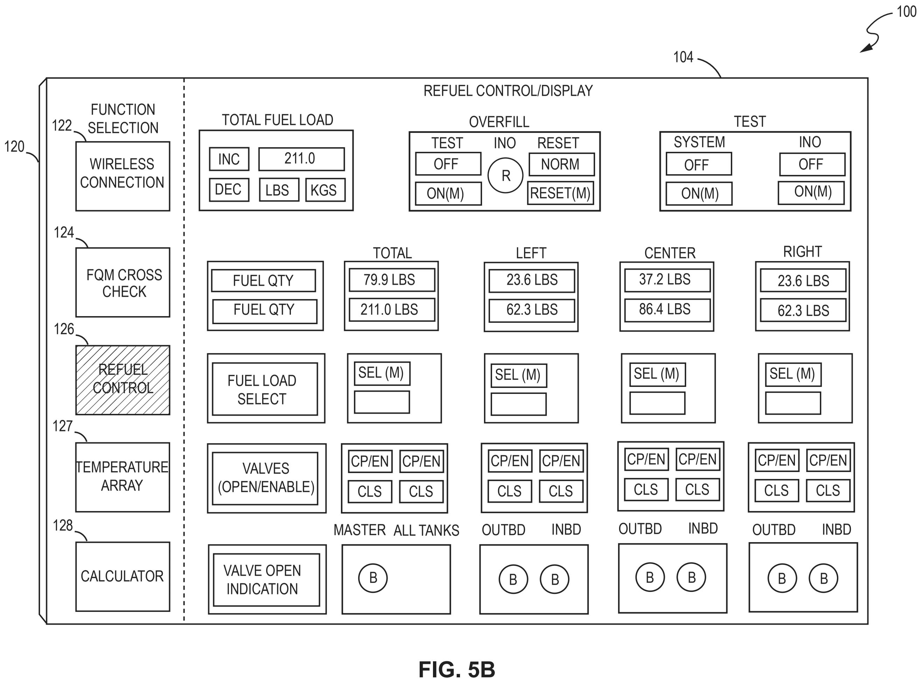

The refuel control 126, when actuated, configures the handheld device 100 to control the refueling operations of aircraft 10. For example, in some examples, such as that illustrated in Figure 5B, handheld device 100 is configured to alter the interactive GUI 104 to display a different set of controls and/or information responsive to detecting the actuation of refuel control 126. In this and certain other examples, the interactive GUI 104 may be generated to appear the same as, or similar to, refueling station panel 70 illustrated in Figure 3. Additionally, activation of refuel control 126 changes the operational mode of handheld device 100 to now function as refueling station panel 70. In practice, different types of aircraft may have different types of refueling station panel s 70, each of which may have a different appearance and/or be configured to perform one or more different functions. Therefore, in some examples, handheld device 100 is configured to generate this fuel panel part of the interactive GUI 104 based, at least in part, on the type of aircraft 10 being refueled. Such information may be provided as input into handheld device 100, or alternatively, be automatically detected by handheld device 100 based on data it receives from aircraft 10 when establishing the communications link.

Regardless, however, once handheld device 100 displays the generated fuel panel portion of the interactive GUI, refueling personnel are able to use handheld device 100 to control and perform one or more of the refueling functions normally facilitated and/or performed by refueling station panel 70. Such functions include, but are not limited to, using the fuel load select control 72 to set the fuel load for one or more tanks on aircraft 10, as well as using the fuel load quantity display section 74 to monitor the amount of fuel currently in the fuel tanks 50 separately and collectively.

The temperature array control 127, when actuated, causes handheld device 100 to display graphics visually representing additional helpful information. This function may be useful, for example, in situations where a fuel tank 50 has multiple temperature sensors. In some examples, when the temperature array control 127 is actuated, the handheld device 100 causes GUI 104 to display one or more indicators visually indicating one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank.

The utility application control 128, when actuated, causes handheld device 100 to launch a utility application, which in this and certain other examples, is a calculator application. The utility application, in at least some cases, may be a third-party application that provides its own interactive GUI for display on handheld device 100. In other cases, however, the utility application launched in response to detecting actuation of the utility application control 128 is an integrated part of the functionality provided handheld device 100.

The example illustrated in Figure 5A depicts only a single utility application control 128 and a single corresponding utility application (e.g., a calculator application). However, the handheld device 100 of the present examples is not limited to integration with only a single utility application and/or type of utility application. Those of ordinary skill in the art will appreciate that in at least one example, handheld device 100 integrates with multiple utility applications, each with its own utility application control 128 in control section 120.

Regardless, the utility application launched responsive to detecting the actuation of the utility application control 128 assists refueling personnel with refueling operations. For example, the example illustrated in Figure 5A identifies the utility application as a calculator application. Refueling personnel might actuate this control to configure handheld device 100 to perform fuel load-specific calculations needed for setting a desired fuel load level in each of the one or more fuel tanks 50.

In addition to controls 122, 124, 126, 127, and 128, control section 120 further provides a visual representation of the raw data received from sensors 52, 54, 56, 58, as well as the current health or operating status of each sensor 52, 54, 56, 58. In this and certain other examples, handheld device 100 generates this section of the interactive GUI 104 to graphically display the statuses of each of the sensors 52, 54, 56, 58 disposed in each tank 50.

Particularly, handheld device 100 generates the control section 120 of interactive GUI 104 to indicate the statuses in the three columns of data fields 132, 134, and 136 in sensor data display section 130. Column 132 is generated to graphically display the statuses of the 52, 54, 56, and 58 in the fuel tank 50 of the port (i.e., left) wing of aircraft 10, column 134 is generated to graphically display the statuses of the sensors 52, 54, 56, and 58 in the center fuel tank of aircraft 10, and column 136 is generated to graphically display the statuses of the sensors 52, 54, 56, and 58 in the fuel tank 50 in the starboard (i.e., right wing) of aircraft 10.

In this and certain other examples, each column 132, 134, 136 comprises a plurality of data fields. Each data field corresponds to a respective one of the sensors 52, 54, 56, and 58. As seen in column 132, for example, each sensor 52, 54, 56, and 58 that is active and operating within normal parameters is indicated with its corresponding sensor data values (e.g., in picofarads). As previously described, the values illustrated in columns 132, 134, 136 are values that have been converted or transformed by refueling station panel 70 from the actual raw sensor data provided by sensors 52, 54, 56, and 58 before being output to handheld device 100 via processing path P2. Any sensors 52, 54, 56, and 58 that are not active and/or are not operating within normal parameters, however, may be indicated using a label 138 such as "FAILED." Alternatively, or in addition to such labels, handheld device 100 is configured to illustrate the status of any given sensor 52, 54, 56, and/or 58 using color. By way of example only, the sensor data values of all sensors 52, 54, 56, and/or 58 that are currently active and operating within normal parameters may be displayed in a green color indicating normal operation. Any sensor 52, 54, 56, and/or 58 that is not currently active and/or not operating within normal parameters, however, may be displayed in a red color.

For example, as seen in columns 132 and 134, respectively, the "FAILED" label 138 corresponding to one of the fuel height sensors 52 in the port wing fuel tank of aircraft 10 may be displayed in red, as may the sensor data values 140 associated with two of the fuel height sensors 52 disposed in the center fuel tank of aircraft 10. In both cases, colorizing the labels and/or the sensor data values and/or the fields that contain the sensor data values allows the ground-based refueling personnel to quickly and easily determine that a problem exists, and more particularly, quickly and easily identify which specific sensor(s) 52, 54, 56, and/or 58 may be the cause of the problem.

In some cases, where the sensor data values associated with the output of sensors 52, 54, 56, and 58 is colorized to indicate failure, the refueling personnel may be able to determine how a given sensor 52, 54, 56, and/or 58 is affected by inspecting its output value. For example, as illustrated by data fields 140 in column 134, the center fuel tank of aircraft 10 has two failed fuel height sensors 52 (i.e., sensors #2 and #4). The sensor data values for these sensors (i.e., 72 pF and 75 pF, respectively) indicate that the capacitance values of both sensors are higher-than-expected, and thus, investigation into the issue is warranted. Additionally, because there are failed sensors, the informational field 112 indicating the total amount of fuel displays ">E" indicating an increased error. In any case, the arrangement of these values displayed on the interactive GUI 104 allows refueling personnel to quickly and easily identify an issue with a specific faulty sensor 52, 54, 56, and/or 58. In some examples, handheld device 100 can generate and send a message indicating the fault and the identified sensor to a predetermined destination device (e.g., a server) that, in turn, notifies appropriate personnel.

Those of ordinary skill in the art should realize that the present examples are not limited to the use of any particular labels or colors. Thus, the use of red and green to show failure and normal operation, respectively, is merely illustrative. Additionally, other colors may be used to indicate an error in terms of its seriousness. In some examples of the present disclosure, handheld device 100 generates the interactive GUI 104 to indicate a marginally operating sensor 52, 54, 56, and/or 58 in yellow and a failed sensor in red. Additionally, in some examples, handheld device 100 generates the interactive GUI 104 to indicate data useful for informational purposes in blue. Regardless of the particular color used, however, some examples of the present disclosure matches those colors to those indicated in legend 114.

The fuel tank status section 150 also performs a dual function. First, the fuel tank status section 150 graphically displays the amount of fuel, as well as the fuel level surface 157, currently in a given fuel tank 50 (e.g., left wing fuel tank, center fuel tank, right wing fuel tank) on aircraft 10. The amounts displayed are determined using the computations performed by panel 70 to convert the raw sensor data output by sensors 52, 54, 56, and 58 to the sensor data values provided to handheld device 100 via processing path P2. Second, the fuel tank status section 150 graphically displays the status of each sensor 52, 54, 56, and/or 58 in the selected fuel tank 50. Particularly, as seen in Figure 5A, the fuel tank status section 150 is generated to show a 2-Dimensional (2D) graphical representation of the selected fuel tank 50.

For example, in this and certain other examples, section 150 includes a plurality of view controls 158 - each representing a different fuel tank 50 on aircraft 10. Selecting any of the view controls 158 controls handheld device 100 to generate and display a graphical icon 152 representing the selected tank. In this and certain other examples, for example, the view control 158 for the left wing fuel tank is selected, thereby causing handheld device 100 to generate and display a graphical icon 152 representing the port wing fuel tank.

Regardless, in this and certain other examples, graphical icon 152 is generated such that one or more of sensors 52, 54, 56, and 58 is represented as a rectangular bar 154. According to the present disclosure, the rectangular bars 154 are generated to indicate the height of the fuel as measured by its corresponding sensor 52. Failed sensors 52, 54, 56, and/or 58 may be indicated using an 'X' or with hatching, as represented in the rectangular bar 156 of this example, and/or with any other desired visual, audible, and/or tactile indicator. Additionally, the status of the sensors 52, 54, 56, and/or 58 as indicated by the rectangular bars 154, 156 in the fuel tank status section 150, corresponds to, and matches, the status indications of sensors 52, 54, 56, and/or 58 displayed in sensor display section 130.

As seen in Figure 5A, the graphics in fuel tank status section 150 are generated as 2D objects. However, none of the examples described in the present disclosure are limited to the generation and display of 2D objects. In other examples, the graphics and objects displayed in fuel tank status section 150 may be generated and displayed as 3D objects as needed or desired.

In more detail, while not specifically shown in the figures, the fuel tank status section 150 in some examples is configured to expand to show a selectable function display. This may occur responsive to maintenance personnel actuating a control on GUI 104. For example, fuel tank status section 150 may be expanded to show an "ELECTRONIC FUEL STICK" function. With this function, the fuel tank section 150 would provide additional fuel-related details, as well as an accurate 3D visual display of the quantity of fuel associated with each fuel stick. Further, the volume of fuel currently in the selected tank 50 (i.e., Left Wing, Center, Right Wing) could be computed and displayed to maintenance personnel.

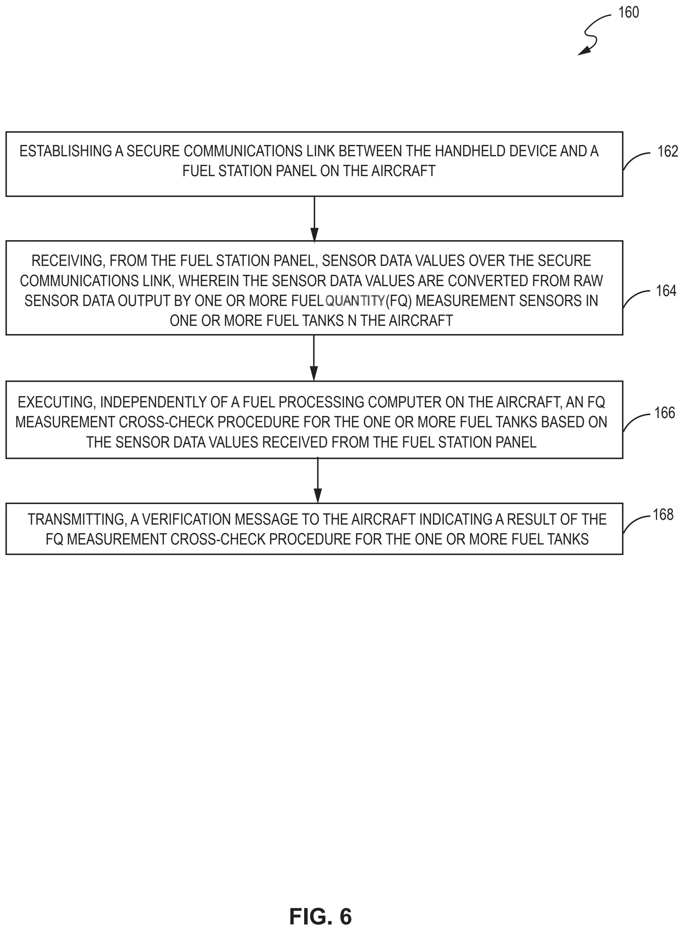

Figure 6 is a flow diagram illustrating a method 160 for performing an independent fuel quantity (FQ) measurement cross-check procedure according to one example of the present disclosure. As seen in Figure 6, method 160, which is performed by handheld device 100, begins with establishing a secure communications link between handheld device 100 and refueling station panel 70 on aircraft 10 (box 162). As previously described, the secure communications link may be a wired communications link or a wireless communication link. Further, the data being communicated over the established link may be encrypted. Once established, method 160 calls for handheld device 100 receiving, from refueling station panel 70, sensor data values over the secure communications link. As previously described, the sensor data values are converted from raw sensor data output by one or more fuel quantity (FQ) measurement sensors 52, 54, 56, 58 in one or more fuel tanks 50 on aircraft 10 (box 164). According to the present disclosure, at least one example of the handheld device 100 receives the sensor data from refueling station panel 70 via a redundant processing path P2 that is independent of the primary processing path P1. So received, method 160 calls for handheld device 100 executing, independently of a fuel processing computer on the aircraft, an FQ measurement cross-check procedure for the one or more fuel tanks based on the sensor data values received from the refueling station panel 70 (box 166). As previously described, the measurement cross-check procedure of this and certain other examples is performed along processing path P2 using resources that are independent of the resources used by the fuel gauge processor 60 along processing path P1. Once complete, method 160 calls for transmitting a verification message to the aircraft indicating a result of the FQ measurement cross-check procedure for the one or more fuel tanks (box 168).

Figure 7 is a flow diagram illustrating a method 170 for establishing a secure communications link between handheld device 100 and aircraft 10 being refueled according to one example of the present disclosure. In this and certain other examples, only one handhold device 100 (e.g., a first handheld device 100) can connect to panel 70 at a time. In some cases, the first handheld device 100 would have exclusive control over panel 70. All other handheld devices 100 would be excluded from such control. In some examples, however, one or more other handheld devices 100 may still be able to connect to panel 70 to monitor the fuel quantity display data even after the first handheld device 100 has connected to control panel 70. In such examples, the data could be displayed on panel 70, as well as on the one or more handheld devices 100, along with an indication that a handheld device 100 (e.g., the first handheld device 100) has exclusive control of panel 70 and that the other handheld devices 100 are excluded from controlling panel 70.

As seen in Figure 7, method 170 calls for handheld device 100 obtaining connection information defining the secure wireless communications link with aircraft 10 (box 172). As stated above, in some examples, the secure communications link comprises a wireless link configured to carry encrypted data. To accomplish this function, method 170 first calls for scanning a Quick Response (QR) code 78 displayed on refueling station panel 70 disposed on an external surface of aircraft 10 using a camera, for example, of handheld device 100 (box 174) and then calls for extracting the connection information from the scan of the QR code 78 (box 176). In some examples, the connection information comprises an aircraft identifier uniquely identifying aircraft 10, data identifying an onboard computer of aircraft 10, and authorization credentials for establishing the secure wireless communications link. So extracted, method 170 calls for handheld device 100 establishing the secure wireless communications link with the aircraft based on the authorization credentials (box 178). Once established, method 170 calls for generating the interactive GUI 104 for output to a display of the handheld device 100 (box 180).

In some examples, the authorization credentials comprise an authentication passcode 80 displayed on a refueling station panel 70 disposed on aircraft 10.

In some examples, the handheld device 100 further comprises an optical sensor (e.g., a camera) configured to scan a Quick Response (QR) code 78 on a refueling station panel 70 disposed on the aircraft 10. To obtain the connection information, the handheld device 100 is configured to extract the connection information from the scan of the QR code.

In some examples, the handheld device 100 further comprises an interactive graphical user interface (GUI) 104 comprising a control section 120 having one or more selectable controls 122, 124, 126, 127, 128. The controls 122, 124, 126, 127, and 128 comprise at least one of a communication control 122 that, when actuated, causes handheld device 100 to establish the secure communications link with refueling station panel 70, a fuel cross-check control 124 that, when actuated, executes the FQ measurement cross-check procedure for the one or more fuel tanks 50 based on the sensor data values received from the refueling station panel 70, a refueling control 126 that, when actuated, executes one or more refueling functions associated with refueling aircraft 10, a temperature array control (127) that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank, and a utility control that, when actuated, causes handheld device 100 to launch a utility application function on the handheld device.

In some examples, the interactive GUI 104 further comprises a fuel tank status section 150 configured to display one or more of an amount of fuel currently in each of the one or more fuel tanks 50, a temperature of the fuel currently in each of the one or more fuel tanks 50, and a total amount of fuel on aircraft 10.

In some examples, the interactive GUI 104 further comprises a sensor data display section 130 configured to graphically display verified measurement values, which are output by the FQ measurement cross-check procedure, for the sensors 52, 54, 56, 58 in the one or more fuel tanks 50, and a status of each of the one or more FQ measurement sensors 52, 54, 56, 58 in each of the one or more fuel tanks 50.

In some examples, the interactive GUI further comprises a fuel tank status section 150 configured to graphically display the status of each of the one or more FQ measurement sensors 52, 54, 56, 58 in each of the one or more fuel tanks 50 and/or a fuel surface level as measured by each of the one or more FQ measurement sensors 52, 54, 56, 58 in each of the one or more fuel tanks 50.

In some examples, the fuel tank status section 150 comprises one or more view controls 158. Each view control 158 is associated with a corresponding fuel tank of the one or more fuel tanks.

In some examples, executing, independently of a fuel processing computer on the aircraft, an FQ measurement cross-check procedure for the one or more fuel tanks, comprises verifying the sensor data values received from the refueling station panel 70 independently of the fuel processing computer on aircraft 10.

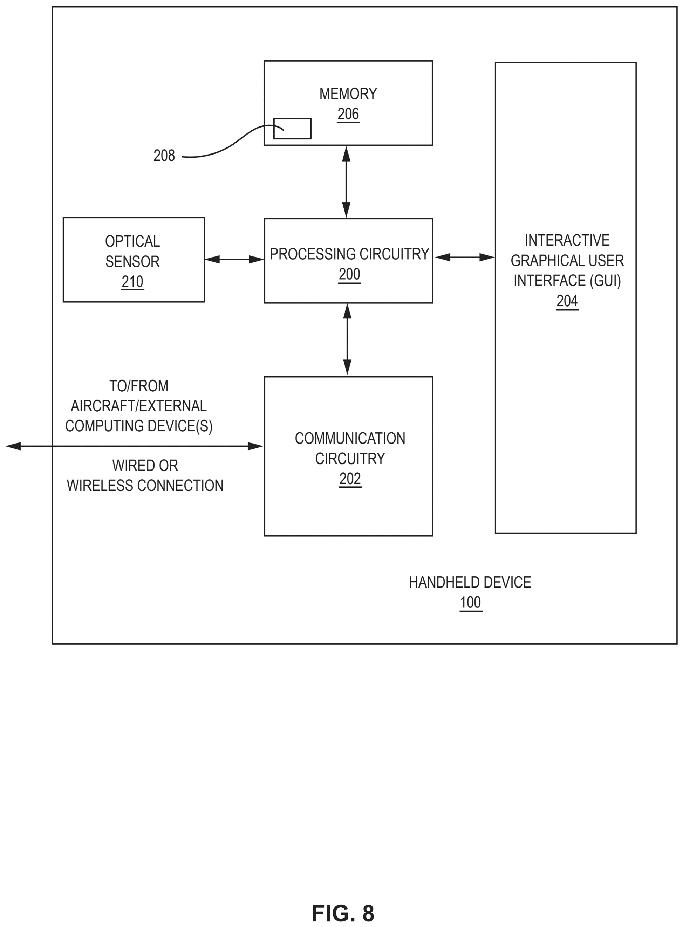

Figure 8 is a functional block diagram of a handheld device 100 configured to perform a FQ measurement cross-check procedure according to one example of the present disclosure. In this and certain other examples, handheld device 100 comprises a stand-alone device specially configured to function as described herein. Such devices are portable, and thus, may be carried and operated by a single person. However, the present disclosure does not limit the handheld device 100 to such device forms. In other examples, handheld device 100 may comprise a mobile communication device (e.g., a smartphone), a laptop computing device, a notebook computing device, and the like.

As seen in Figure 8, handheld device 100 comprises processing circuitry 200, communication circuitry 202, an interactive GUI 204, memory 206 configured to store a control program 208, and an optical sensor 210, such as a camera, for example.

Processing circuitry 200 comprises computer hardware circuitry capable of processing information such as, for example, data, computer programs and/or other suitable electronic information. More particularly, processing circuitry 200 comprises a collection of electronic circuits which may be packaged as an integrated circuit (IC) or multiple interconnected integrated circuits (e.g., a "chip"). According to the present disclosure, processing circuitry 200 may be configured to execute computer programs, such as control program 208, having programming instructions for controlling the operations and functions of the handheld device 100 according to the methods herein described including methods 160 and 170 illustrated in Figures 6 and 7, respectively.

Processing circuitry 200 may comprise one or more processors, a multi-core processor, or some other type of processor, depending on the particular implementation. Further, processing circuitry 200 may be implemented using a number of heterogeneous processor systems in which a main processor is present with one or more secondary processors on a single chip. In some examples, processing circuitry 200 may be a symmetric multi-processor system containing multiple processors of the same type. In some examples, processing circuitry 200 may be embodied as, or otherwise include, one or more application-specific integrated circuits (ASICs), Field Programmable Gate Arrays (FPGAs), or the like. Thus, although processing circuitry 200 may be capable of executing a computer program (e.g., control program 208) to perform one or more functions, the processing circuitry 200 of various examples may be capable of performing one or more functions without the aid of a computer program. In either instance, the processing circuitry 200 may be appropriately programmed to perform functions or operations according to examples of the present disclosure, such as including methods 160 and 170 illustrated in Figures 6 and 7, respectively.

Communications circuitry 202 may have one or more transmitters and/or receivers configured to transmit and/or receive information, such as data, to and/or from other systems on aircraft 10 and to one or more other remotely located computing devices via any of a variety of public and/or private computer networks. Such systems include, but are not limited to, refueling station panel 70, flight deck panel 90, and sensors 52, 54, 56, and 58. As stated above, communications circuitry 202 may be configured to transmit and/or receive information via physical (i.e., wired) and/or wireless communications links. Examples of suitable communication interfaces include a network interface controller (NIC), a wireless NIC (WNIC) or the like.

The interactive GUI 204 comprises an input/output interface with which a user, such as refueling personnel, can use to interact with and control handheld device 100. Generally, the interactive GUI 204 may be displayed on a touch-sensitive display of handheld device 100 and comprises a variety of controls that may be actuated by the refueling personnel. Additionally, in some examples, interactive GUI 204 is generated based at least partially on the sensor data values provided to handheld device 100 by refueling station panel 70, as previously described. In this regard, interactive GUI 204 may be configured to perform the functions previously described with respect to Figures 5A-5B above.

Memory circuitry 206 is generally computer hardware configured to store information such as, for example, data, computer programs, such as control program 208, and/or other suitable information either on a temporary basis and/or a permanent basis. Memory circuitry 206 may include volatile and/or non-volatile memory and may be fixed or removable. Examples of suitable memory circuitry 206 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like.

In various examples, memory circuitry 206 may be referred to as a computer-readable storage medium. The computer-readable storage medium is a non-transitory device capable of storing information and is distinguishable from computer-readable transmission media such as electronic transitory signals capable of carrying information from one location to another.

Control program 208, as will be appreciated by those of ordinary skill in the art without undue experimentation, comprises the program code and instructions that, when executed by processing circuitry 200, control handheld device 100 to perform the methods of the present disclosure, including methods 160, 170 illustrated in Figures 6 and 7, respectively. Control program 208 may be stored in a computer-readable storage medium, such as memory circuitry 206, and control the functions of handheld device 100, as previously described, thereby generating a particular machine or particular article of manufacture.

Optical sensor 210 may, for example, comprise a camera. According to the present disclosure, optical sensor 210 is configured to scan a QR code 78 displayed on refueling station panel 70 and provide that scan to processing circuitry 200. Upon receipt, processing circuitry 200 extracts the information needed to establish a secure wireless communications link with aircraft 10 and establishes the link.

Further examples are provided in the following clauses.

Clause 1. A handheld device (100) for refueling an aircraft (10), the handheld device comprising: communication circuitry (202) configured to communicatively connect the handheld device to a refueling station panel (70) on the aircraft; and processing circuitry (200) configured to: establish (162) a secure communications link with the refueling station panel on the aircraft; receive (164), from the refueling station panel, sensor data values over the secure communications link, wherein the sensor data values are converted from raw sensor data output by one or more fuel quantity (FQ) measurement sensors (52, 54, 56, 58) in one or more fuel tanks (50) on the aircraft; execute (166), independently of a fuel processing computer (60) on the aircraft, a fuel quantity measurement cross-check procedure for the one or more fuel tanks based on the sensor data values received from the refueling station panel; and transmit (168) a verification message to the aircraft indicating a result of the fuel quantity measurement cross-check procedure for the one or more fuel tanks.

Clause 2. The handheld device of clause 1, wherein the secure communications link comprises a wireless link configured to carry encrypted data, and wherein to establish a secure wireless communications link, the processing circuitry is configured to: obtain (172) connection information defining the secure wireless communications link with the aircraft, the connection information comprising: an aircraft identifier uniquely identifying the aircraft; data identifying an onboard computer of the aircraft; and authorization credentials; and establish (178) the secure wireless communications link with the aircraft based on the authorization credentials.

Clause 3. The handheld device of clause 2, wherein the authorization credentials comprise an authentication passcode (80) displayed on the refueling station panel disposed on the aircraft.

Clause 4. The handheld device of clause 2 or 3, further comprising an optical sensor (210) configured to scan (174) a Quick Response (QR) code (78) on the refueling station panel disposed on the aircraft, and wherein to obtain the connection information, the processing circuitry is configured to extract (176) the connection information from the scan of the QR code.

Clause 5. The handheld device of any of clauses 1 to 4, further comprising an interactive graphical user interface (GUI) (104) comprising a control section (120) having one or more selectable controls (122, 124, 126, 127, 128) comprising at least one of: a communication control (122) that, when actuated, causes the processing circuitry to establish the secure communications link with the refueling station panel; a fuel cross-check control (124) that, when actuated, causes the processing circuitry to execute the fuel quantity measurement cross-check procedure for the one or more fuel tanks based on the sensor data values received from the refueling station panel; a refueling control (126) that, when actuated, causes the processing circuitry to perform one or more refueling functions associated with refueling the aircraft; a temperature array control (127) that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank; and a utility control (128) that, when actuated, causes the processing circuitry to launch a utility function on the handheld device.

Clause 6. The handheld device of clause 5, wherein the interactive GUI further comprises a fuel tank status section (110) configured to display one or more of: an amount of fuel currently in each of the one or more fuel tanks; a temperature of the fuel currently in each of the one or more fuel tanks; and a total amount of fuel on the aircraft.

Clause 7. The handheld device of clause 5 or 6, wherein the interactive GUI further comprises a sensor data display section (130) configured to graphically display: verified measurement values for the sensors in the one or more fuel tanks, wherein the verified measurement values are output by the fuel quantity measurement cross-check procedure; and a status of each of the one or more fuel quantity measurement sensors in each of the one or more fuel tanks.

Clause 8. The handheld device of clause 7, wherein the interactive GUI further comprises a fuel tank status section (150) configured to graphically display: the status of each of the one or more fuel quantity measurement sensors in each of the one or more fuel tanks; and/or a fuel surface level as measured by each of the one or more fuel quantity measurement sensors in each of the one or more fuel tanks.

Clause 9. The handheld device of clause 8, wherein the fuel tank status section comprises one or more view controls (158), each view control being associated with a corresponding fuel tank of the one or more fuel tanks.

Clause 10. The handheld device of clause 9, wherein to execute the fuel quantity measurement cross-check procedure, the processing circuitry is configured to verify the sensor data values received from the refueling station panel independently of the fuel processing computer on the aircraft.

Clause 11. A method (160) for refueling an aircraft (10), the method implemented by a handheld device (100) and comprising: establishing (162) a secure communications link between the handheld device and a refueling station panel (70) on the aircraft; receiving (164), from the refueling station panel, sensor data values over the secure communications link, wherein the sensor data values are converted from raw sensor data output by one or more fuel quantity (FQ) measurement sensors (52, 54, 56, 58) in one or more fuel tanks (50) on the aircraft; executing (166), independently of a fuel processing computer (60) on the aircraft, a fuel quantity measurement cross-check procedure for the one or more fuel tanks based on the sensor data values received from the refueling station panel; and transmitting (168), a verification message to the aircraft indicating a result of the fuel quantity measurement cross-check procedure for the one or more fuel tanks.

Clause 12. The method of clause 11, wherein the secure communications link comprises a wireless link and is configured carry encrypted data, and wherein establishing a secure wireless communications link comprises: obtaining (172) connection information defining the secure wireless communications link with the aircraft, the connection information comprising: an aircraft identifier uniquely identifying the aircraft; data identifying an onboard computer of the aircraft; and authorization credentials; and establishing (178) the secure wireless communications link with the aircraft based on the authorization credentials.

Clause 13. The method of clause 12, wherein the authorization credentials comprise an authentication passcode displayed on the refueling station panel disposed on the aircraft.

Clause 14. The method of clause 12 or 13, wherein obtaining connection information defining the secure wireless communications link with the aircraft comprises: scanning (174) a Quick Response (QR) code (80) displayed on the refueling station panel disposed on a surface of the aircraft using a camera (210) of the handheld device; and extracting (176) the connection information from the scan of the QR code.

Clause 15. The method of any of clauses 11 to 14, further comprising generating (180) an interactive graphical user interface (GUI) (104) for output to a display of the handheld device, the interactive GUI comprising a control section (120) having one or more selectable controls comprising at least one of: a communication control (122) that, when actuated, establishes the secure communications link with the refueling station panel; a fuel cross-check control (124) that, when actuated, executes the fuel quantity measurement cross-check procedure for the one or more fuel tanks based on the sensor data values received from the refueling station panel; a refueling control (126) that, when actuated, executes one or more refueling functions associated with refueling the aircraft; a temperature array control (127) that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank; and a utility control (128) that, when actuated, launches a utility application function on the handheld device.

Clause 16. The method of clause 15, wherein the interactive GUI further comprises a fuel tank status section (110) configured to display one or more of: an amount of fuel currently in each of the one or more fuel tanks; a temperature of the fuel currently in each of the one or more fuel tanks; and a total amount of fuel on the aircraft.

Clause 17. The method of clause 15 or 16, wherein the interactive GUI further comprises a sensor data display section (130) configured to graphically display: verified measurement values for the sensors in the one or more fuel tanks, wherein the verified measurement values are output by the fuel quantity measurement cross-check procedure; and a status of each of the one or more fuel quantity measurement sensors in each of the one or more fuel tanks.

Clause 18. The method of clause 17, wherein the interactive GUI further comprises a fuel tank status section (150) configured to graphically display: the status of each of the one or more fuel quantity measurement sensors in each of the one or more fuel tanks; and/or a fuel surface level as measured by each of the one or more fuel quantity measurement sensors in each of the one or more fuel tanks.

Clause 19. The method of clause 18, wherein executing, independently of a fuel processing computer on the aircraft, a fuel quantity measurement cross-check procedure for the one or more fuel tanks, comprises verifying the sensor data values received from the refueling station panel independently of the fuel processing computer on the aircraft.

Clause 20. A handheld device (100) for refueling an aircraft (10), the handheld device comprising: memory circuitry (206) configured to store a control program (208); and processing circuitry (202) configured to execute the control program to: receive (164), from a refueling station panel (70), sensor data values, wherein the sensor data values are converted from raw sensor data output by one or more fuel quantity (FQ) measurement sensors (52, 54, 56, 58) associated with one or more fuel tanks (50) on the aircraft; execute (166), independently of a fuel processing computer (60) on the aircraft, a fuel quantity measurement cross-check procedure for the one or more fuel tanks based on the sensor data values received from the refueling station panel; and transmit (168) a verification message to a flight deck panel (90) on the aircraft indicating a result of the fuel quantity measurement cross-check procedure for the one or more fuel tanks.

Clause 21. A system comprising an aircraft (10) and a handheld device (100) for refueling the aircraft (10),wherein: the aircraft (10) comprises: a refueling station panel (70) on the aircraft; one or more fuel tanks (50); one or more fuel quantity (FQ) measurement sensors (52, 54, 56, 58) in the one or more fuel tanks (50); a fuel processing computer (60); and the handheld device (100) comprises: communication circuitry (202) configured to communicatively connect the handheld device to the refueling station panel (70); and processing circuitry (200) configured to: establish (162) a secure communications link with the refueling station panel on the aircraft; receive (164), from the refueling station panel, sensor data values over the secure communications link, wherein the sensor data values are converted from raw sensor data output by the one or more fuel quantity measurement sensors (52, 54, 56, 58); execute (166), independently of the fuel processing computer (60), a fuel quantity measurement cross-check procedure for the one or more fuel tanks based on the sensor data values received from the refueling station panel; and transmit (168) a verification message to the aircraft indicating a result of the fuel quantity measurement cross-check procedure for the one or more fuel tanks.

Clause 22. The system of clause 21, wherein the secure communications link comprises a wireless link configured to carry encrypted data, and wherein to establish a secure wireless communications link, the processing circuitry is configured to: obtain (172) connection information defining the secure wireless communications link with the aircraft, the connection information comprising: an aircraft identifier uniquely identifying the aircraft; data identifying an onboard computer of the aircraft; and authorization credentials; and establish (178) the secure wireless communications link with the aircraft based on the authorization credentials.

Clause 23. The system of clause 22, wherein the authorization credentials comprise an authentication passcode (80) displayed on the refueling station panel.

Clause 24. The system of clause 22 or 23, wherein the handheld device (100) further comprises an optical sensor (210) configured to scan (174) a Quick Response (QR) code (78) on the refueling station panel and, to obtain the connection information, the processing circuitry is configured to extract (176) the connection information from the scan of the QR code.

Clause 25. The system of any of clauses 21 to 24, wherein the handheld device (100) further comprises an interactive graphical user interface (GUI) (104) comprising a control section (120) having one or more selectable controls (122, 124, 126, 127, 128) comprising at least one of: a communication control (122) that, when actuated, causes the processing circuitry to establish the secure communications link with the refueling station panel; a fuel cross-check control (124) that, when actuated, causes the processing circuitry to execute the fuel quantity measurement cross-check procedure for the one or more fuel tanks based on the sensor data values received from the refueling station panel; a refueling control (126) that, when actuated, causes the processing circuitry to perform one or more refueling functions associated with refueling the aircraft; a temperature array control (127) that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank; and a utility control (128) that, when actuated, causes the processing circuitry to launch a utility function on the handheld device.

Clause 26. The system of clause 25, wherein the interactive GUI further comprises a fuel tank status section (110) configured to display one or more of: an amount of fuel currently in each of the one or more fuel tanks; a temperature of the fuel currently in each of the one or more fuel tanks; and a total amount of fuel on the aircraft.

Clause 27. The system of clause 25 or 26, wherein the interactive GUI further comprises a sensor data display section (130) configured to graphically display: verified measurement values for the sensors in the one or more fuel tanks, wherein the verified measurement values are output by the fuel quantity measurement cross-check procedure; and a status of each of the one or more fuel quantity measurement sensors in each of the one or more fuel tanks.

Clause 28. The system of clause 27, wherein the interactive GUI further comprises a fuel tank status section (150) configured to graphically display: the status of each of the one or more fuel quantity measurement sensors in each of the one or more fuel tanks; and/or a fuel surface level as measured by each of the one or more fuel quantity measurement sensors in each of the one or more fuel tanks.

Clause 29. The system of clause 28, wherein the fuel tank status section comprises one or more view controls (158), each view control being associated with a corresponding fuel tank of the one or more fuel tanks.

Clause 30. The system of clause 29, wherein to execute the fuel quantity measurement cross-check procedure, the processing circuitry is configured to verify the sensor data values received from the refueling station panel independently of the fuel processing computer on the aircraft.

The foregoing description and the accompanying drawings represent non-limiting examples of the methods and apparatus taught herein. For example, the present disclosure describes the examples in the context of an aircraft 10. However, those of ordinary skill in the art will readily appreciate that this is for illustrative purposes only, and that the examples described herein are not limited solely to use in aircraft. Rather, the previously described examples can be implemented on other types of vehicles to achieve the same or similar benefits. Such vehicles include, but are not limited to, manned and unmanned automobiles, manned and unmanned aircraft, manned and unmanned rotorcraft, manned and unmanned rockets and/or missiles, manned and unmanned surface water borne craft, manned and unmanned sub-surface waterborne craft, and the like, as well as combinations thereof. As such, the examples of the present disclosure are not limited by the foregoing description and accompanying drawings. Instead, the examples of the present disclosure are limited only by the following claims.

## Claims

1. A handheld device (100) for refueling an aircraft (10), the handheld device comprising:
communication circuitry (202) configured to communicatively connect the handheld device to a refueling station panel (70) on the aircraft; and
processing circuitry (200) configured to:
establish (162) a secure communications link with the refueling station panel on the aircraft;
receive (164), from the refueling station panel, sensor data values over the secure communications link, wherein the sensor data values are converted from raw sensor data output by one or more fuel quantity (FQ) measurement sensors (52, 54, 56, 58) in one or more fuel tanks (50) on the aircraft;
execute (166), independently of a fuel processing computer (60) on the aircraft, a fuel quantity measurement cross-check procedure for the one or more fuel tanks based on the sensor data values received from the refueling station panel; and
transmit (168) a verification message to the aircraft indicating a result of the fuel quantity measurement cross-check procedure for the one or more fuel tanks.

2. The handheld device of claim 1, wherein the secure communications link comprises a wireless link configured to carry encrypted data, and wherein to establish a secure wireless communications link, the processing circuitry is configured to:
obtain (172) connection information defining the secure wireless communications link with the aircraft, the connection information comprising:
an aircraft identifier uniquely identifying the aircraft;
data identifying an onboard computer of the aircraft; and
authorization credentials; and
establish (178) the secure wireless communications link with the aircraft based on the authorization credentials.

3. The handheld device of claim 2, wherein the authorization credentials comprise an authentication passcode (80) displayed on the refueling station panel disposed on the aircraft.

4. The handheld device of claim 2 or 3, further comprising an optical sensor (210) configured to scan (174) a Quick Response (QR) code (78) on the refueling station panel disposed on the aircraft, and wherein to obtain the connection information, the processing circuitry is configured to extract (176) the connection information from the scan of the QR code.

5. The handheld device of any preceding claim, further comprising an interactive graphical user interface (GUI) (104) comprising a control section (120) having one or more selectable controls (122, 124, 126, 127, 128) comprising at least one of:
a communication control (122) that, when actuated, causes the processing circuitry to establish the secure communications link with the refueling station panel;
a fuel cross-check control (124) that, when actuated, causes the processing circuitry to execute a fuel quantity measurement cross-check procedure for the one or more fuel tanks based on the sensor data values received from the refueling station panel;
a refueling control (126) that, when actuated, causes the processing circuitry to perform one or more refueling functions associated with refueling the aircraft;
a temperature array control (127) that, when actuated, configures the GUI to display one or more of a fuel temperature gradient for a volume of fuel in a selected fuel tank, a volume of the fuel in the selected fuel tank, a surface level of the fuel in the selected fuel tank, and a level of the fuel for each sensor in the selected fuel tank; and
a utility control (128) that, when actuated, causes the processing circuitry to launch a utility function on the handheld device.

6. The handheld device of claim 5, wherein the interactive GUI further comprises a fuel tank status section (110) configured to display one or more of:
an amount of fuel currently in each of the one or more fuel tanks;
a temperature of the fuel currently in each of the one or more fuel tanks; and
a total amount of fuel on the aircraft.

7. The handheld device of claim 5 or 6, wherein the interactive GUI further comprises a sensor data display section (130) configured to graphically display:
verified measurement values for the sensors in the one or more fuel tanks, wherein the verified measurement values are output by the fuel quantity measurement cross-check procedure; and
a status of each of the one or more fuel quantity measurement sensors in each of the one or more fuel tanks.

8. The handheld device of claim 7, wherein the interactive GUI further comprises a fuel tank status section (150) configured to graphically display:
the status of each of the one or more fuel quantity measurement sensors in each of the one or more fuel tanks; and/or
a fuel surface level as measured by each of the one or more fuel quantity measurement sensors in each of the one or more fuel tanks.

9. The handheld device of claim 8, wherein the fuel tank status section comprises one or more view controls (158), each view control being associated with a corresponding fuel tank of the one or more fuel tanks.

10. The handheld device of claim 9, wherein to execute the fuel quantity measurement cross-check procedure, the processing circuitry is configured to verify the sensor data values received from the refueling station panel independently of the fuel processing computer on the aircraft.

11. A system comprising an aircraft (10) and the handheld device (100) of any preceding claim.

12. A method (160) for refueling an aircraft (10), the method implemented by a handheld device (100) and comprising:
establishing (162) a secure communications link between the handheld device and a refueling station panel (70) on the aircraft;
receiving (164), from the refueling station panel, sensor data values over the secure communications link, wherein the sensor data values are converted from raw sensor data output by one or more fuel quantity (FQ) measurement sensors (52, 54, 56, 58) in one or more fuel tanks (50) on the aircraft;
executing (166), independently of a fuel processing computer (60) on the aircraft, a fuel quantity measurement cross-check procedure for the one or more fuel tanks based on the sensor data values received from the refueling station panel; and
transmitting (168), a verification message to the aircraft indicating a result of the fuel quantity measurement cross-check procedure for the one or more fuel tanks.

13. The method of claim 12, wherein the secure communications link comprises a wireless link and is configured carry encrypted data, and wherein establishing a secure wireless communications link comprises:
obtaining (172) connection information defining the secure wireless communications link with the aircraft, the connection information comprising:
an aircraft identifier uniquely identifying the aircraft;
data identifying an onboard computer of the aircraft; and
authorization credentials; and
establishing (178) the secure wireless communications link with the aircraft based on the authorization credentials.

14. The method of claim 13, wherein the authorization credentials comprise an authentication passcode displayed on the refueling station panel disposed on the aircraft.

15. The method of claim 13 or 14, wherein obtaining connection information defining the secure wireless communications link with the aircraft comprises:
scanning (174) a Quick Response (QR) code (80) displayed on the refueling station panel disposed on a surface of the aircraft using a camera (210) of the handheld device; and
extracting (176) the connection information from the scan of the QR code.
